# EUROPEAN PATENT APPLICATION

(11) **EP 0 537 525 A2**
(43) Date of publication of application: **21.04.1993**
(21) Application number: 92116412.5
(22) Date of filing: 24.09.1992
(51) Int. Cl.: G06F 11/00

(54) **Computer system with reset function performing system reset after a power failure**

(30) Priority: 30.09.1991 JP 252583/91
(71) Applicant: KABUSHIKI KAISHA TOSHIBA, Kawasaki-shi, Kanagawa-ken 210 (JP)
(72) Inventor: Yamaki, Kazunori, c/o Intellectual Prop. Div., Minato-ku, Tokyo 105 (JP)
(74) Representative: Henkel, Feiler, Hänzel & Partner

(57) **Abstract**

In a computer system wherein an extended unit (10) is connected to a computer main body (1), a power supply unit (11) and power monitoring circuitry (12) which are independent of the computer main body (1) are arranged in the extended unit (10). The computer main body (1) includes reset control circuitry (5) for outputting a signal corresponding to a system reset signal (SR) on the basis of a signal (Mb) representing an abnormal power and output from power monitoring circuitry (12) of the extended unit (10). The computer main body (1) includes logic gate circuitry (6) for outputting the system reset signal (SR) generated upon the power failure on the basis of an output signal from the reset control circuitry (5) or a signal (Ma) representing the abnormal power and output from power monitoring circuitry (4) for monitoring the power supply state of the computer main body (1).

## Description

The present invention relates to a laptop portable computer and, more particularly, to a computer system having a reset function for resetting the system when power failure occurs.

In a laptop portable computer, the number of main functions of a system arranged in a computer main body is minimized to design a compact and low-cost computer. On the other hand, the main functions of the system may be insufficient to utilize various application software.

For this reason, a computer having the following arrangement is used. That is, an extended unit added to the main functions of the system to extend the functions of the system is prepared, and the extended unit is connected to the computer main body. As the extended unit, a unit having an extended memory for extending the memory area of a memory arranged in the computer main body is used.

As an extended unit, a unit having power supply circuitry which is independent of the power supply circuitry of the computer main body is used. The extended unit has a power switch which is independent of the computer main body, and the power supply of the extended unit is independently controlled.

In a computer system, a power supply has failed, and the level of a power supply voltage applied to various units such as a CPU (Central Processing Unit) is decreased to a level falling outside an allowable range to cause an erroneous operation. In order to prevent this erroneous operation, a power monitoring unit is arranged.

In such a portable computer, a power monitoring unit which has a simple arrangement using a known reset IC (more specifically, RST520 type of MITSUMI DENKI Co. (JAPAN)), always checks the output voltage level of the power supply circuitry, and outputs a signal representing a power failure when the voltage level is decreased to a level falling outside the allowable range. In the system, system reset for resetting the operations of the various units such as the CPU is performed on the basis of the signal representing the abnormal power state and output from the power monitoring unit.

Since the power monitoring unit having the above simple arrangement has only a function of monitoring the voltage level of the power supply circuitry, the power monitoring unit cannot monitor the voltage level of the power supply circuitry arranged in the extended unit.

Therefore, even if the power supply circuitry arranged on the extended unit has failed, and the drive voltage levels of the memory circuitry and the like of the extended unit are decreased to a level falling outside the allowable range, the computer main body cannot detect an abnormal power state. For this reason, the circuitry such as a memory arranged in the extended unit may be erroneously operated by an abnormal power. This erroneous operation of the extended unit may cause an erroneous operation of, e.g., the CPU or the like of the computer main body.

It is an object of the present invention to monitor a failure of power supply circuitry of an extended unit to perform system reset when the power state of the extended unit becomes abnormal, thereby preventing erroneous operation of a computer system in which the extended unit having the independent power supply circuitry can be connected to a computer main body.

In order to achieve the above object, there is provided a computer system having the following arrangement. That is, the system comprises a power supply unit for generating a first power supply voltage for driving various constituent units of the system; a power monitoring unit for monitoring the first power supply voltage generated by the power supply unit and outputting a first signal representing a power failure when a level of the first power supply voltage goes to an abnormal level; an extended unit connected to the system and having circuitry for performing a predetermined extended function added to a main function of the system, a power supply unit for generating a second power supply voltage for driving the circuitry, and power monitoring circuitry for monitoring the second power supply voltage and outputting a second signal representing a power failure when a level of the second power supply voltage goes to the abnormal level; and a reset control unit for outputting a system reset signal for resetting the system on the basis of one of the first signal output from the power monitoring unit and the second signal output from the extended unit.

This invention can be more fully understood from the following detailed description when taken in conjunction with the accompanying drawings, in which:
Fig. 1 is a block diagram showing the main part of a computer system according to the present invention;
Fig. 2 is a block diagram schematically showing a portable computer to which the present invention is applied;
Fig. 3 is a block diagram showing an arrangement of reset control circuitry according to the present invention;
Figs. 4A to 4E are timing charts for explaining an operation of the reset control circuitry according to the present invention;
Fig. 5 is a block diagram showing an arrangement of power monitoring circuitry according to the present invention; and
Fig. 6 is a flow chart for explaining an operation of the present invention.

An embodiment of the present invention will be described below with reference to the accompanying drawings.

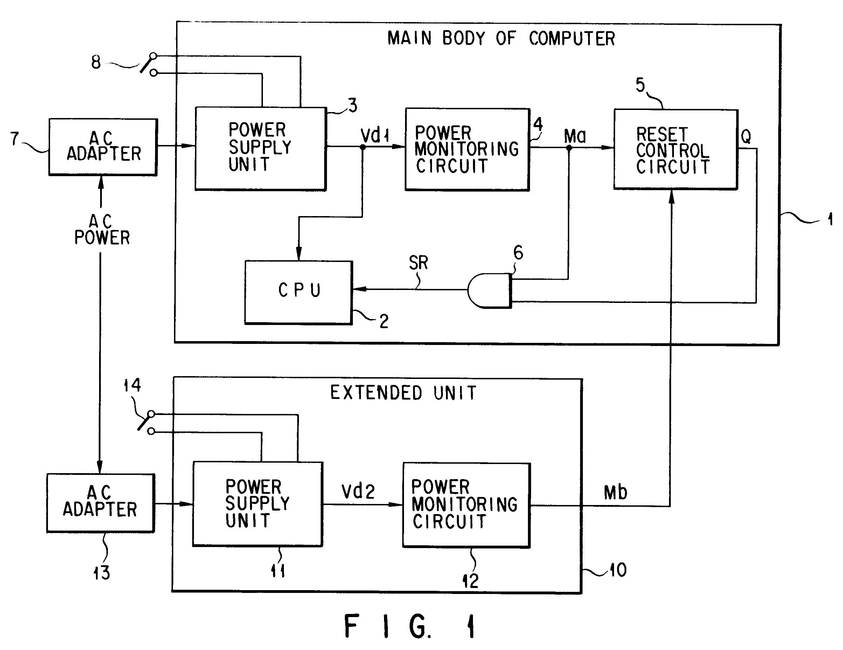

A computer system according to the present invention, as shown in Fig. 1, basically comprises a computer main body 1 and an extended unit 10 connected to the main body 1. The extended unit 10 is a detachable unit having circuitry such as an extended memory to perform an additional function for complementing the main function (data processing function) of the main body 1.

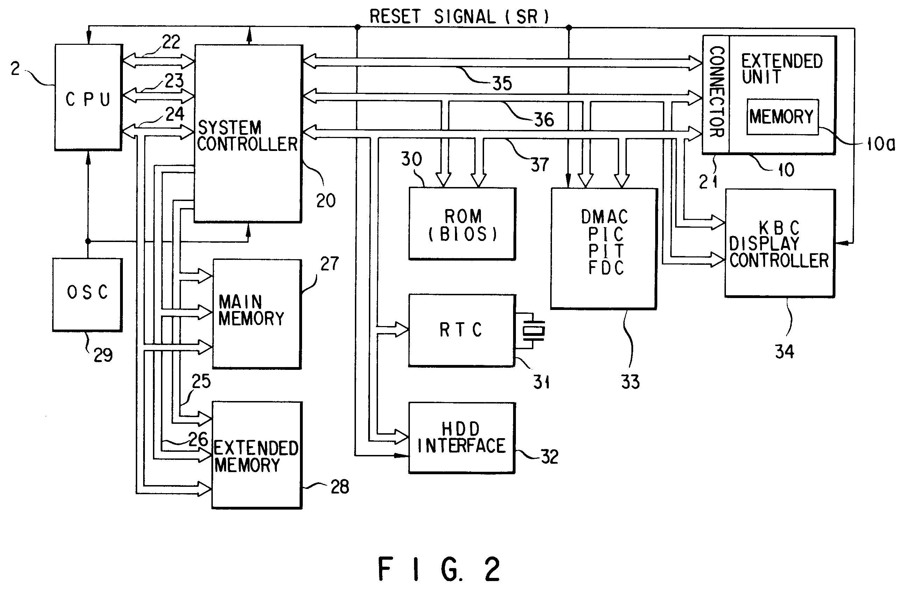

The computer main body 1 has a CPU 2 and various units (Fig. 2) and performs a data processing function. In addition, the main body 1 has a power supply unit 3 for supplying a drive power to the CPU 2 and the various units.

When the power supply unit 3 is applied with a commercial AC power supply voltage through an AC adapter 7, the power supply unit 3 converts the AC power supply voltage into a DC power supply voltage Vd1 and applies it to the CPU 2 and the various units. The power supply unit 3 is ON/OFF-controlled by a power switch 8, and the power supply unit 3 outputs the power supply voltage Vd1 when the power switch 8 is turned on.

In addition, the main body 1 has power monitoring circuitry 4 for monitoring the abnormal power state of the power supply unit 3 and reset control circuitry 5 serving as the main part of the main body 1.

The power monitoring circuitry 4 checks the level of the power supply voltage Vd1 output from the power supply unit 3. When the voltage level falls outside a predetermined allowable range, the power monitoring circuitry 4 changes the level to logic level "L" and outputs a signal Ma representing the failure of the power supply unit 11. The level of the power supply voltage Vd1 is kept at a normal level required for normally driving the CPU 2 and the various units, the signal Ma is kept at logic level "H".

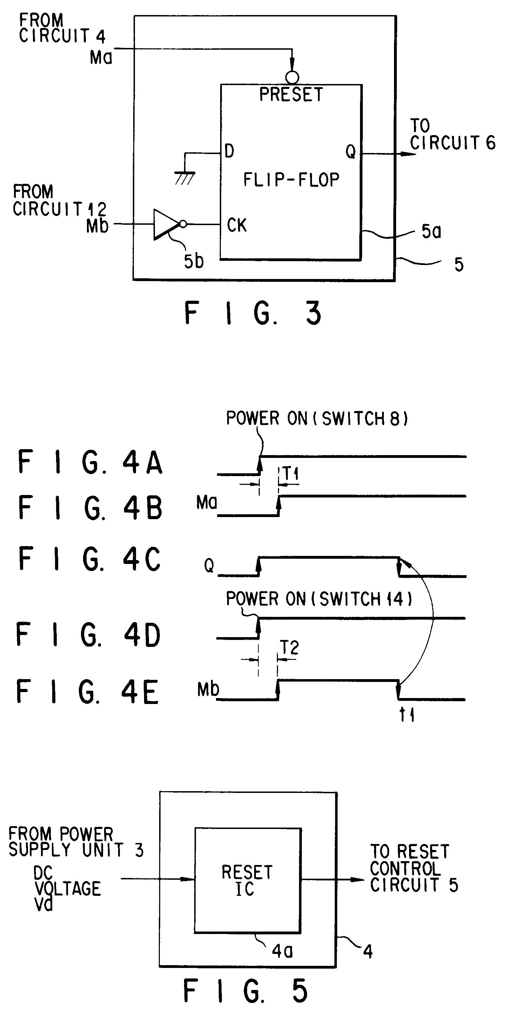

The power monitoring circuitry 4, as shown in Fig. 5, comprises a known reset IC 4a. In the power monitoring circuitry 4, when the level of the power supply voltage Vd1 serving as an input voltage becomes equal to or lower than a predetermined level, an output voltage level is changed from logic level "H" to logic level "L". More specifically, this reset IC 4a is RST520 type of MITSUMI DENKI Co. (JAPAN).

The main body 1 has logic gate circuitry 6 for outputting a reset signal SR for performing system reset in an abnormal power state. The logic gate circuitry 6 basically comprises an AND gate. The signal Ma output from the power monitoring circuitry 4 and changed to logic level "L" is transferred as the system reset signal SR to the CPU 2 and the various units by the logic gate circuitry 6. When the CPU 2 and the various units receive the system reset signal SR, they are reset to stop their operations.

The reset control circuitry 5 is circuitry for outputting the system reset signal SR when a power supply unit 11 of the extended unit 10 has failed to generate an abnormal power.

The extended unit 10 has the power supply unit 11 which is independent of the power supply unit 3 of the main body 1. The power supply unit 11 outputs a drive power supply voltage Vd2 to various circuits (extended memory and the like) arranged in the extended unit 10. When the power supply unit 11 receives a commercial AC power supply voltage through an AC adapter 13, the power supply unit 11 converts the AC power supply voltage into the power supply voltage Vd2 to output it. The power supply unit 11 is ON/OFF-controlled by a power switch 14, and the power supply unit 11 outputs the power supply voltage Vd2 when the power switch 14 is turned on.

In addition, the extended unit 10 has power monitoring circuitry 12 for monitoring the abnormal power state of the power supply unit 11. The power monitoring circuitry 12 checks the level of the power supply voltage Vd2 output from the power supply unit 11. When the voltage level falls outside the predetermined allowable range, the power monitoring circuitry 12 changes the level to logic level "L" and outputs a signal Mb representing the failure of the power supply unit 11. When the power supply voltage Vd2 is kept at a normal level, the signal Mb is kept at logic level "H". The power monitoring circuitry 12, as in the power monitoring circuitry 4, comprises a reset IC 4a shown in Fig. 5.

The reset control circuitry 5, as shown in Fig. 3, comprises a data input type (D type) flip-flop 5a. The preset terminal (PRESET) of the flip-flop 5a is connected to the output terminal of the power monitoring circuitry 4 of the main body 1 and receives the signal Ma output from the power monitoring circuitry 4. The data input terminal (D) is grounded. Furthermore, the clock terminal (CK) of the flip-flop 5a is connected to the output terminal of the power monitoring circuitry 12 of the extended unit 10 through an inverter 5b and receives the signal Mb output from the power monitoring circuitry 12.

The flip-flop 5a is preset by the signal Ma of logic level "L", and the output terminal of the flip-flop 5a outputs a signal Q of logic level "H". Furthermore, an input signal of logic level "L" corresponding to the ground of the data input terminal is set in response to a clock signal (output signal of the inverter 5a) input to the clock terminal (CK) to output the signal Q of logic level "L".

Fig. 2 is a block diagram showing an arrangement of a portable computer to which the computer system of the present invention is applied. The portable computer mainly comprises the CPU 2, a system controller 20, and various units.

The system controller 20 is an LSI constituting an interface between the CPU 2 and various units. More specifically, the system controller 20 has various functions of a bus controller, a memory controller, an I/O (input/output) controller, and the like. The system controller 20 is connected to the CPU 2 through a control bus 22, an address bus 23, and a data bus 24. The system controller 20 is connected to a main memory 27 and an extended memory 28 other than the CPU 2 through a memory control bus 25 and a memory address bus 26. The system controller 20 receives a clock pulse required for the operation of the system controller 20 from a clock generator (OSC) 29. The clock generator 29 supplies a clock pulse to not only the system controller 20 but to the CPU 2.

The various units include a ROM (read-only memory) 30, an RTC (real time controller) 31, and an HDD (hard disk drive) interface 32. In addition, the various units include a unit 33 having a DMAC, a PIC, a PIT, and an FDC and a unit 34 having a KBC and a display controller. The DMAC is a direct memory access controller. The PIC is a programmable interrupt controller. The PIT is a programmable interval timer. The FDC is a floppy disk controller. The KBC is a keyboard controller.

The system controller 20 is connected to the various units 30 to 34 through a control bus 35, an address bus 36, and a data bus 37. In addition, the system controller 20 is connected to the extended unit 10 having the power supply of the present invention through a connector 21 for only the extended unit. Data, an address, and various control signals are received and transmitted between the system controller 20 and an extended memory 10a arranged in the extended unit 10 through the control bus 35, the address bus 36, and the data bus 37.

When the present invention is applied to the portable computer shown in Fig. 2, the reset control circuitry 5 and the logic gate circuitry 6 are included in the system controller 20. The extended unit 10 transfers the signal Mb output from the power monitoring circuitry 12 to the reset control circuitry 5 of the system controller 20 through the control bus 35. The logic gate circuitry 6 of the system controller 20 outputs the system reset signal SR to the CPU 2 and the various units 32 and 33.

Note that the various units corresponding to the power supply unit 3 and the power monitoring circuitry 4 of the computer main body 1 are omitted in Fig. 2.

An operation of the embodiment of the present invention will be described below.

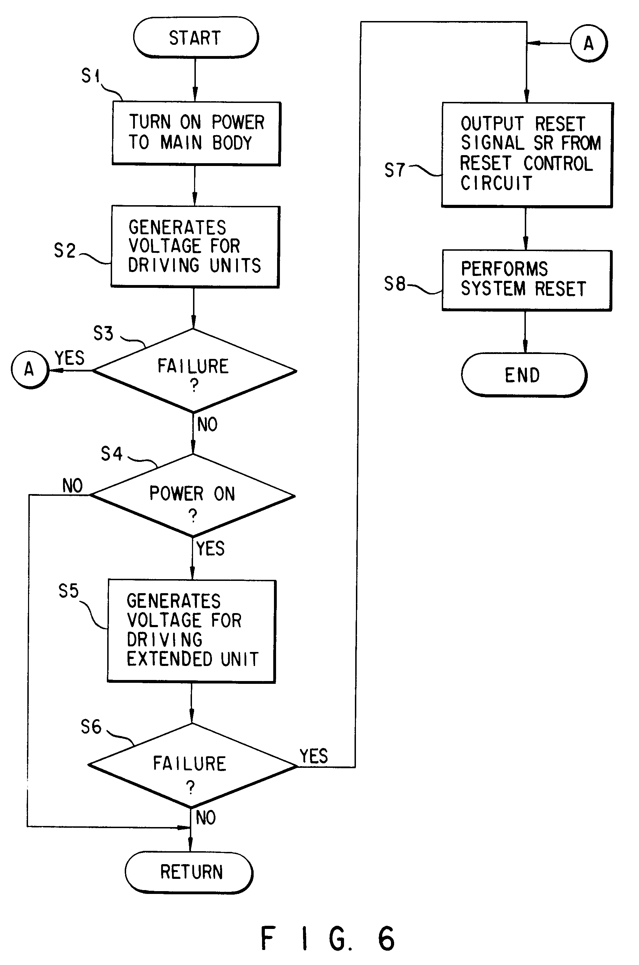

As shown in step S1 of Fig. 6, the power switch 8 of the computer main body 1 is turned on, and a commercial AC power supply voltage is applied to the power supply unit 3 of the computer main body 1 through the AC adapter 7.

The power supply unit 3 converts the applied AC power supply voltage into the DC power supply voltage Vd1 to output it (step S2). The power supply unit 3 applies the power supply voltage Vd1 to the CPU 2 and various units of the main body 1 as a drive power supply voltage. That is, as shown in Fig. 2, the power supply voltage Vd1 from the power supply unit 3 is applied to the system controller 20, the various units 27, 28, and 29, and the various units 30 to 34.

The power monitoring circuitry 4 always checks the level of the power supply voltage Vd1 output from the power supply unit 3. When the level of the power supply voltage Vd1 is set at a normal level, the output signal Ma is kept at logic level "H". At this time, as shown in Figs. 4A and 4B, the level of the signal Ma output from the power monitoring circuitry 4 is changed to logic level "H" representing a normal state with the delay of a short time T1 after the power switch 8 of the computer main body 1 is turned on. This time T1 is a delay time required for the power supply unit 3 until the level of the power supply voltage Vd1 reaches a normal level after the power switch 8 is turned on.

In the reset control circuitry 5, as shown in Fig. 3, the preset terminal (PRESET) of the flip-flop 5a receives the signal Ma from the power monitoring circuitry 4. During the time T1 after the power switch 8 is turned on, the level of the power supply voltage Vd1 output from the power supply unit 3 is not at a normal level, the level of the output signal from the power monitoring circuitry 4 is set at logic level "L". The flip-flop 5a of the reset control circuitry 5 is preset in accordance with the signal Ma of logic level "L".

Therefore, as shown in Fig. 4C, when the main body 1 is turned on, the flip-flop 5a of the reset control circuitry 5a outputs the signal Q of logic level "H".

On the other hand, the extended unit 10 is connected to the main body 1 through the connector 21 shown in Fig. 2. In the extended unit 10, when the power switch 14 is turned on, a commercial AC power supply voltage is applied to the power supply unit 11 of the extended unit 10 through the AC adapter 13 (YES in step S4).

The power supply unit 11 converts the applied AC power supply voltage into the DC power supply voltage Vd2 to output it (step S5). The power supply unit 11 applies the power supply voltage Vd2 as a drive power supply voltage to the various circuits (the extended memory 10a) arranged in the extended unit 10.

As in the main body 1, the power monitoring circuitry 12 of the extended unit 10 always checks the level of the power supply voltage Vd2 output from the power supply unit 11. When the level of the power supply voltage Vd2 is set at a normal level, the power monitoring circuitry 12 keeps the level of the output signal Mb at logic level "H".

In this case, as shown in Figs. 4D and 4E, the level of the signal Mb output from the power monitoring circuitry 12 is changed to logic level "H" representing a normal state with a lapse of a short time T2 after the power switch 14 is turned on. This time T2 is a delay time required for the power supply unit 10 until the level of the power supply voltage Vd2 reaches a normal level after the power switch 14 is turned on.

During application of the power supply voltages to the computer main body 1 and the extended unit 10, when the power supply unit 11 of the extended unit 10 has failed, the level of the power supply voltage Vd2 output from the power supply unit 11 is decreased to a level falling outside an allowable range (YES in step S6).

When the level of the power supply voltage Vd2 is decreased to the level falling outside the allowable range, the power monitoring circuitry 12 detects an abnormal power, and the power monitoring circuitry 12 changes the signal Mb of logic level "H" to the signal Mb of logic level "L" (time t1 in Fig. 14).

In the reset control circuitry 5, the clock terminal (CK) of the flip-flop 5a receives the signal Mb from the power monitoring circuitry 12 through the inverter 5b. For this reason, when the level of the signal Mb is changed to logic level "L", a clock changed to logic level "H" is input to the clock terminal (CK) of the flip-flop 5a from the inverter 5b. In this manner, the flip-flop 5a sets an input signal of logic level "L" and changes the signal Q of logic level "H" to the signal of logic level "L".

That is, the extended unit 10 has an abnormal power, the reset control circuitry 5 outputs the signal Q of logic level "L" to the logic gate circuitry 6. The logic gate circuitry 6 outputs the system reset signal SR of logic level "L" (step S7). The computer main body 1 performs system reset in response to the system reset signal SR (step S8). More specifically, as shown in Fig. 2, the logic gate circuitry 6 included in the system controller 20 outputs the system reset signal SR to the CPU 2 and the various units 32 and 33.

When the power supply unit 3 of the computer main body 1 has failed, and the level of the power supply voltage Vd1 from the power supply unit 3 is decreased to a level falling outside the allowable range (step S3), the power monitoring circuitry 4 outputs the signal Ma whose level is changed to logic level "L" to the logic gate circuitry 6. Therefore, in this case, the logic gate circuitry 6 outputs the system reset signal SR of logic level "L".

In this manner, in the system wherein the extended unit 10 having the power supply unit 11 is connected independently of the main body 1, when the power supply of the extended unit 10 has an abnormal power, the reset control circuitry 5 and the logic gate circuitry 6 output the system reset signal SR. Therefore, the system is reset by the system reset signal SR. In this manner, even when the various circuits such as the extended memory 10a arranged in the extended unit 10 are erroneously operated by the abnormal power, the operation of the computer main body 1 is stopped by the system reset. For this reason, the erroneous operation of the computer main body caused by the erroneous operation of the extended unit 10 caused by the abnormal power can be reliably prevented.

## Claims

1. A computer system comprising:
power supply means for generating a first power supply voltage for driving various constituent units of said system;
power monitoring means for monitoring the first power supply voltage generated by said power supply means and outputting a first signal representing a power failure when a level of the first power supply voltage goes to an abnormal level;
extended means connected to said system and having circuitry for performing a predetermined extended function added to a main function of said system, a power supply unit for generating a second power supply voltage for driving said circuitry, and power monitoring circuitry for monitoring the second power supply voltage and outputting a second signal representing a power failure when a level of the second power supply voltage goes to the abnormal level; and
reset control means for outputting a system reset signal for resetting said system on the basis of one of the first signal output from said power monitoring means and the second signal output from said extended means.

2. A system according to claim 1, characterized in that said power supply means receives an AC power and converts the applied AC power into a power supply voltage of a predetermined DC level and outputs the power supply voltage of the predetermined DC level in response to a switching operation of a power switch.

3. A system according to claim 1, characterized in that said extended means comprises a power supply unit for receiving an AC power, converting the AC power applied by a power switch into a power supply voltage of a predetermined DC level, and outputting the power supply voltage of the predetermined DC level.

4. A system according to claim 1, characterized in that said extended means comprises extended memory circuitry used for performing data processing which is a main function of said system.

5. A system according to claim 1, characterized in that said reset control means comprises reset control circuitry for outputting the system reset signal on the basis of the second signal output from said extended means and logic gate circuitry for outputting the first signal output from said power monitoring means as the system reset signal.

6. A system according to claim 1, characterized in that said reset control means comprises a flip-flop for outputting a given signal as the system reset signal, the given signal being output when said flip-flop is preset in synchronous with generation of the first power supply voltage of a normal level from said power supply means and when said flip-flop is reset in synchronous with input of the second signal output from said extended means.

7. A system according to claim 6, characterized in that said reset control means comprises reset control circuitry consisting of said flip-flop and logic circuitry for outputting one of the system reset signal output from said flip-flop and the first signal output from said power monitoring means as the system reset signal.

8. A computer system having a system controller with an interface function for data transferring between a CPU and peripheral units, comprising:
power supply means for generating a first power supply voltage for driving said CPU and said peripheral units of said system;
power monitoring means, arranged in said system controller, for monitoring the first power supply voltage generated by said power supply means and outputting a first signal representing a power failure when a level of the first power supply voltage is set at an abnormal level;
extended means connected to said system controller and having circuitry, accessed by said CPU, for performing a predetermined extended function added to a data processing function of said CPU, a power supply unit for generating a second power supply voltage for driving said circuitry, and power monitoring circuitry for monitoring said second power supply voltage and outputting a second signal representing a power failure when a level of said second power supply voltage is set at the abnormal level; and
reset control means, arranged in said system controller, for outputting a system reset signal for resetting said CPU and said peripheral units on the basis of one of the first signal output from said power monitoring means and the second signal output from said extended means.
